# EUROPÄISCHE PATENTSCHRIFT

(11) **EP 1 286 240 B1**
(45) Veröffentlichungstag und Bekanntmachung des Hinweises auf die Patenterteilung: **11.08.2004**
(21) Anmeldenummer: 01890242.9
(22) Anmeldetag: 22.08.2001
(51) Int. Cl.: G05D 13/00, G05D 7/06, F04B 17/00, F04B 43/12

(54) **Verfahren zur Ermittlung einer Pumpen-Regelkennlinie**
Method of determining a pump-characteristic
Méthode de détermination d'une caractéristique de pompe

(43) Veröffentlichungstag der Anmeldung: 26.02.2003
(73) Patentinhaber: Pumpenfabrik Ernst Vogel Gesellschaft m.b.H., 2000 Stockerau (AT)
(72) Erfinder: Sacher, Manfred Ing., 1190 Wien (AT)
(74) Vertreter: Kopecky, Helmut, Dipl.-Ing.

(56) Entgegenhaltungen:
- DE-A- 3 606 751
- US-A- 4 976 590
- US-A- 6 142 752

## Beschreibung

Die Erfindung betrifft ein Verfahren zur Ermittlung einer Sollwert-Anlagenkurve zur Regelung der Förderleistung einer von einem drehzahlgeregelten Elektromotor angetriebenen Pumpe, mittels derer ein Fluid in einer Anlage durch vorgegebene Leitungen und Verbraucher bewegt wird, deren Anzahl und lichter Querschnitt variabel sind, bei welchem Regelungsverfahren mittels eines Sensors eine für die momentane Förderleistung der Pumpe repräsentative physikalische Größe erfaßt und ein dieser physikalischen Größe proportionales elektrisches Signal einem Regler als Ist-Wert zugeführt wird, durch welchen Regler die Drehzahl des Elektromotors und damit die Förderleistung der Pumpe anhand der Sollwert-Anlagenkurve geregelt wird.

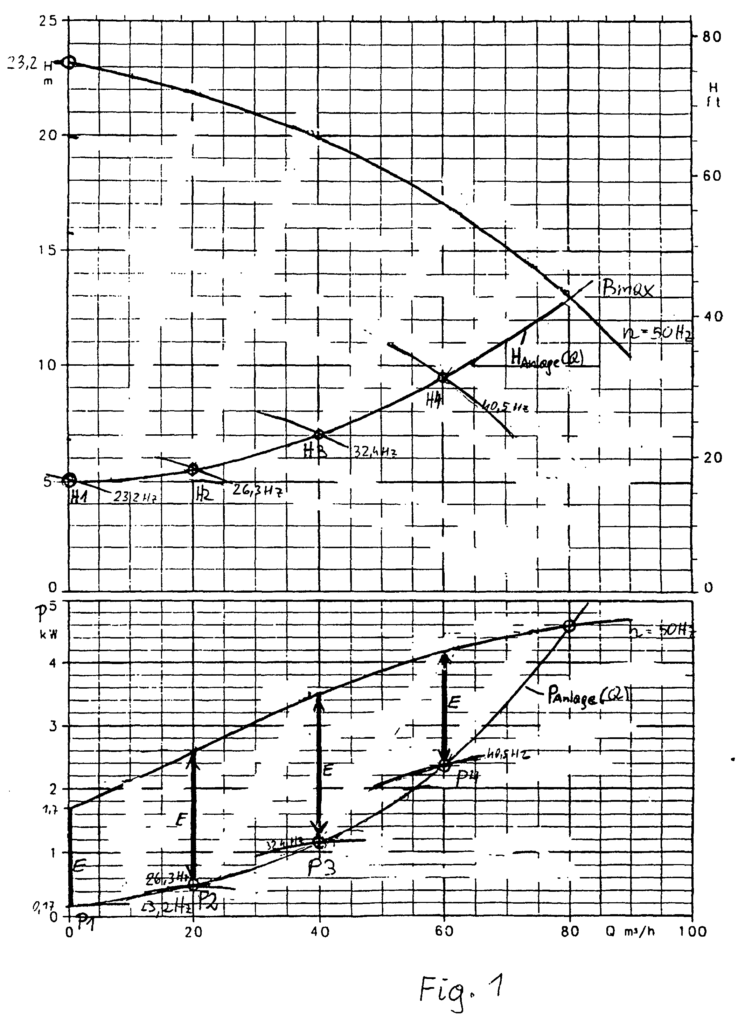

Mit einem Elektromotor angetriebene Pumpen, insbesondere Kreiselpumpen werden häufig in Anlagen eingesetzt, in welchen sich die von der Anlage her geforderte Leistung der Pumpe über die Zeit verändert. Dies ist beispielsweise bei Pumpen in Heizungsanlagen der Fall. Hier wird die volle Förderleistung nur dann benötigt, wenn alle Verbraucher zugeschaltet sind. Im praktischen Betrieb werden jedoch die Verbraucher, zum Beispiel einzelne Heizkörper, zu gewissen Zeiten nur reduziert betrieben oder ganz abgeschaltet, so dass sich zeitlich variabel ganz unterschiedliche Betriebszustände mit unterschiedlichem Förderleistungsbedarf ergeben. Die maximale Leistung der Pumpe in einer solchen Anlage muss jedoch stets so bemessen werden, dass alle in der Anlage befindlichen Verbraucher auch dann ausreichend versorgt werden können, wenn sie gleichzeitig mit maximalem Bedarf eingeschaltet sind. Wird die Pumpe permanent, das heißt auch bei reduziertem Förderleistungsbedarf, mit der vollen Leistung betrieben, so wird - unnötigerweise - die Förderleistung der Maschine über das erforderliche Maß hinaus angehoben. Dieses Verhalten ist anhand einer Flüssigkeitskreiselpumpe im oberen Teil des Diagramms von Fig. 1 zu sehen, das eine Schar von Pumpenkennlinien der Kreiselpumpe darstellt, das heißt, die Förderhöhe H als Funktion der Fördermenge Q bei einer bestimmten Drehzahl n. In diesem Diagramm ist nur die Pumpenkennlinie für eine Drehzahl der Pumpe von n = 50 Hz vollständig dargestellt, weitere Pumpenkennlinien für n = 40,5 Hz, n = 32,4 Hz, n = 26,3 Hz und n = 23,2 Hz sind nur als Kurvenstücke gezeigt.

Die Dimensionierung der erforderlichen Leistung einer solchen Kreiselpumpe in einer Anlage ergibt sich durch Festlegung eines Betriebspunkts Bmax, der sich als der Schnittpunkt einer geforderten maximalen Fördermenge Qmax (in diesem Beispiel 80 m³/h), wenn alle Verbraucher vollständig zugeschaltet sind, und der bei dieser Fördermenge Qmax für einen reibungslosen Betrieb der Anlage erforderlichen Förderhöhe H (in diesem Beispiel 13 m) darstellt. Die diesen Betriebspunkt Bmax schneidende Pumpenkennlinie (in diesem Beispiel jene für n = 50 Hz) gibt die maximale Drehzahl der Pumpe an, die notwendig ist, um bei einem Verbrauch von 100% (=Qmax) die erforderliche Förderhöhe aufrecht zu erhalten. Sinkt jedoch der tatsächliche Verbrauch in der Anlage, so erhöht sich bei einem Betrieb der Pumpe mit gleichbleibender Drehzahl n = 50 Hz die Förderhöhe H, d.h. der momentane Betriebspunkt wandert entlang der Pumpenkennlinie nach links oben. Man erkennt also, dass eine solcherart betriebene Anlage äußerst unwirtschaftlich läuft. Zudem können störende Strömungsgeräusche entstehen, wenn die Leistung wesentlich über der in der Anlage tatsächlich benötigten liegt.

Zur Verbesserung des Energieverbrauchs und des Geräuschpegels einer Pumpe ist es bekannt, die Förderleistung (= Förderhöhe x Fördermenge) einer Kreiselpumpe so zu regeln, dass sich unabhängig von der jeweiligen Fördermenge am Pumpenausgang eine konstante Förderhöhe einstellt, die mittels eines Drucksensors gemessen und einem Regler als Ist-Signal zugeführt werden kann.

Eine solche Regelung auf konstante Förderhöhe berücksichtigt jedoch nicht die tatsächlichen Verhältnisse in der Anlage. Insbesondere werden dabei nicht die unvermeidlichen Druckabfälle im Leitungssystem und den zugeschalteten Verbrauchern berücksichtigt.

Um die Regelung der Pumpe einer solchen Anlage zu verbessern, ist es daher notwendig, eine Sollwert-Anlagenkurve zu definieren, die die Anlagenverluste in Abhängigkeit von der Fördermenge zumindest ansatzweise berücksichtigt.

Das Regelungsverhalten einer solchen Anlage mit variabler Sollwert-Anlagenkurve ist in den Diagrammen von Fig. 1 dargestellt, einmal im Förderhöhen/Fördermengen-Diagramm als Sollwert-Anlagenkurve H_{Anlage} (Q), und ein weiteres Mal im Leistungsaufnahme/Fördermengen-Diagramm als Sollwert-Anlagenkurve P_{Anlage}(Q). Beide Sollwert-Anlagenkurven weisen etwa parabolischen Verlauf, allerdings mit unterschiedlichen Steigungen auf.

Im Leistungsaufnahme/Fördermengen-Diagramm ist auch die jeweilige Energieeinsparung bei einer Pumpenregelung unter Verwendung der genannten Sollwert-Anlagenkennlinie gegenüber dem Betrieb der Pumpe mit einer konstanten Drehzahl von n = 50 Hz dargestellt.

In der Praxis stellt sich jedoch das Problem, wie man zu einer angemessenen Sollwert-Anlagenkennlinie gelangt. Es ist bekannt, solche Sollwert-Anlagenkurven tabellarisch anhand von Leitungs- und Verbraucherkenndaten zu ermitteln oder Verlustkurven als mathematische Funktion zu definieren. Beiden Verfahren ist gemeinsam, dass es sich dabei um theoretische Ansätze handelt, die nicht die tatsächlichen Verhältnisse in der Anlage, z.B. Leitungsquerschnittsverringerung durch Verstopfen oder Verkalken, Lecken der Anlage, Wirbelbildung durch Knicke oder starke Biegungen in den Leitungen berücksichtigen können. Daher bieten viele Pumpensysteme auch die Möglichkeit, eine Betriebsperson von Hand Sollwert-Tabellen in einen Regler eingeben zu lassen, die sie aufgrund ihrer Erfahrung oder vorausgegangener Messungen an der Anlage festlegt (siehe z.B. DE-OS 37 04 756). Es ist jedoch leicht einzusehen, dass alle genannten Verfahren die Anlagenverhältnisse nur unzureichend berücksichtigen.

Aus der EP 0 444 269 ist es bekannt, zur Regelung der Leistung einer von einem drehzahlgeregelten Elektromotor angetriebenen Pumpe in einem geschlossenen System, das Leitungen und Verbraucher umfasst, zunächst in einem Kalibriervorgang bei beliebigem Zustand des Systems das elektrische Signal einer Fluid-Strömungsgeschwindigkeits-Sonde in mehreren Punkten mit gezielter Einstellung der Pumpenleistung und zugehöriger prozentualer Strömungsgeschwindigkeit des Fluids vom Stillstand der Pumpe bis zu 100 %. Leistung derselben entsprechend 100 % Strömungsgeschwindigkeit zumindest in Stufen aufzunehmen und einem Rechner jeweils als Meßwert einzugeben, der eine Kennlinie erzeugt, die durch alle von der Sonde gelieferten Meßwerte verläuft, wobei die Regelung der Leistung der Pumpe durch den Rechner zunächst entsprechend dieser Kennlinie solange in den durch den Kalibriervorgang gegebenen Grenzen erfolgt, bis durch Änderungen im System eine höhere Strömungsgeschwindigkeit des Fluids als bei 100 % Leistung der Pumpe beim Kalibriervorgang auftritt, woraufhin vom Rechner der höchste Wert der Strömungsgeschwindigkeit auf der verlängerten Kennlinie als neuer Meßwert für 100 % Leistung der Pumpe festgelegt wird und der Rechner alle prozentualen Werte der Strömungsgeschwindigkeit auf der Kennlinie jeweils in einem Verhältnis verschiebt, das dem Verhältnis der neuen höchsten Strömungsgeschwindigkeit zu der vorangegangenen entspricht, wobei analoge Adaptionen der Kennlinie jeweils dann durch den Rechner durchgeführt werden, wenn eine weitere Erhöhung der Strömungsgeschwindigkeit eintritt.

Die vorliegende Erfindung bietet ein Verfahren zur Ermittlung einer Sollwert-Anlagenkurve an, das die geschilderten Nachteile des Standes der Technik vermeidet und den tatsächlichen Anlagenverhältnissen gerecht wird.

Das erfindungsgemäße Verfahren weist die folgenden Schritte auf:
a) das Schließen aller Verbraucher in der Anlage,
b) das Erfassen eines Verbraucher-Betriebsparameters an einem von der Pumpe entfernten Verbraucher, vorzugsweise an dem von der Pumpe am entferntesten angeordneten Verbraucher, welcher Parameter für die Betreibbarkeit dieses Verbrauchers repräsentativ ist, und das Variieren der momentanen Pumpenleistung, bis der Verbraucher-Betriebsparameter einen vorgegebenen Wert annimmt,
c) das Übermitteln eines Bestätigungs-Signals an den Regler, sobald der Verbraucher-Betriebsparameter den vorgegebenen Wert erreicht hat,
d) auf den Erhalt des Bestätigungs-Signals das Ermitteln der momentanen Werte eines Pumpen-Parameterpaars, das für die momentane Förderleistung der Pumpe repräsentativ ist und Speichern dieser Werte im Regler,
e) das Öffnen eines oder mehrerer Verbraucher und Wiederholen der Verfahrensschritte b) bis d), und
f) das Errechnen einer Funktion durch ein mathematisches Kurvenbildungsverfahren aus den abgespeicherten Werten der Pumpen-Parameterpaare, und Abspeichern dieser Funktion als Sollwert-Anlagenkurve im Regler.

Die dabei errechnete Kurve muss nicht notwendigerweise durch alle ermittelten Parameterpaare hindurchgehen, sondern kann für einen optimierten Kurvenverlauf auch dazwischen verlaufen.

Vorzugsweise wird der Verbraucher-Betriebsparameters an dem von der Pumpe am entferntesten angeordneten Verbraucher erfasst, da davon ausgegangen werden kann, dass der Wert dieses Parameters am letzten Verbraucher aufgrund der Leitungsverluste minimal ist, so dass bei korrekter Einstellung für den entferntesten Verbraucher auch alle anderen Verbraucher im System ausreichend versorgt werden. Kennt man jedoch aufgrund empirischer Versuche oder Berechnungen den Zusammenhang der Werte des Verbraucher-Betriebsparameters am entferntesten Verbraucher und der Werte an einem anderen Verbraucher, so kann auch dieser andere Verbraucher zur Durchführung des Verfahrens herangezogen werden, wobei der genannte Zusammenhang entsprechend zu berücksichtigen ist.

Das Übermitteln eines Bestätigungs-Signals an den Regler, sobald der Verbraucher-Betriebsparameter den vorgegebenen Wert erreicht hat, kann vorzugsweise automatisiert ablaufen, beispielsweise über eine Daten-Fernübertragung. In einer einfachen Variante kann die Übermittlung des Bestätigungssignal aber auch manuell, beispielsweise durch Kontakt zwischen zwei Bedienpersonen, davon eine mit Zugang zum Regler und die andere am entfernten Verbraucher postiert, erfolgen.

Um eine möglichst genaue Sollwert-Anlagenkurve zu erhalten, ist es zweckmäßig, wenn der Verfahrensschritt e) vielfach, zumindest aber zweimal hintereinander durchlaufen wird.

Bevorzugt ist der Verbraucher-Betriebsparameter ein Differenzdruck zwischen dem Eingang und dem Ausgang des entfernten Verbrauchers, da ein solcher Differenzdruck auf einfache Weise durch vorübergehendes Anschließen eines Differenzdruck-Sensors am Zu- und Ablauf des Verbrauchers ermittelbar ist.

Bevorzugt umfasst das Pumpen-Parameterpaar die Pumpen-Fördermenge und die aufgenommene elektrische Leistung des Pumpen-Antriebsmotors und wird ermittelt durch Messen von zwei Parametern aus der Pumpen-Fördermenge, der aufgenommenen elektrischen Leistung des Pumpen-Antriebsmotors und der Drehzahl der Pumpe, gegebenenfalls unter Errechnen des fehlenden Parameters aus den mathematischen Zusammenhängen zwischen diesen drei Parametern. Es läßt sich nämlich eine Kurvenschar angeben, die für jede Drehzahl der Pumpe einen charakteristischen Verlauf der aufgenommenen elektrischen Leistung des Pumpenantriebsmotors in Abhängigkeit von der Fördermenge darstellt. Da sich die Messung der Drehzahl und der Leistungsaufnahme in ein Pumpen-Regelgerät oder einen Frequenzumrichter integrieren läßt, kann somit eine äußerst betriebssichere und kostengünstige Konstruktion eines Pumpenregelgeräts erreicht werden.

Eine alternative bevorzugte Ausführungsform des erfindungsgemäßen Verfahrens ist dadurch gekennzeichnet, dass das Pumpen-Parameterpaar die Pumpen-Fördermenge und die Pumpen-Förderhöhe umfasst und ermittelt wird durch Messen von zwei Parametern aus der Pumpen-Fördermenge, der Pumpen-Förderhöhe und der Drehzahl der Pumpe, gegebenenfalls unter Errechnen des fehlenden Parameters aus den mathematischen Zusammenhängen zwischen diesen drei Parametern. Es läßt sich nämlich auch eine Kurvenschar angeben, die für jede Drehzahl der Pumpe einen charakteristischen Verlauf der Pumpen-Förderhöhe in Abhängigkeit von der Fördermenge darstellt. Da sich die Messung der Drehzahl in ein Pumpen-Regelgerät oder einen Frequenzumrichter integrieren läßt, und die Pumpen-Förderhöhe über einen Druckdifferenz-Sensor zwischen Pumpenaus- und eingang ermittelt werden kann, ist mit dieser Ausführung eine äußerst betriebssichere Konstruktion eines Pumpenregelgeräts möglich.

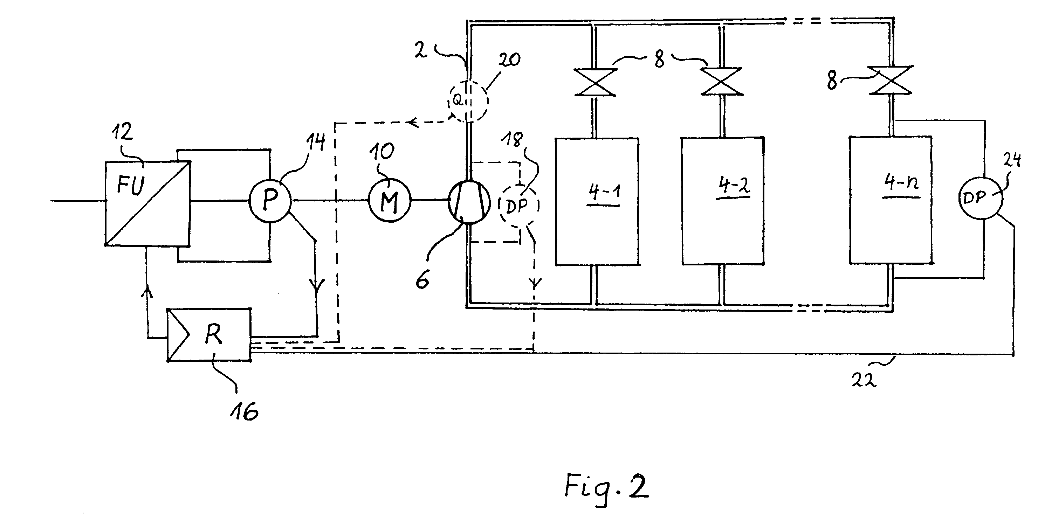

Zur näheren Erläuterung der Erfindung werden im Folgenden unter Bezugnahme auf die beiliegenden Zeichnungen Ausführungsformen davon beschrieben. In den Zeichnungen zeigt Fig. 1 Diagramme einer Pumpenkennlinienschar, d.h. Förderhöhe in Abhängigkeit von der Fördermenge und der Drehzahl der Pumpe, und eine Schar von Leistungsaufnahmekennlinien des Pumpenmotors in Abhängigkeit von der Pumpen-Fördermenge und der Drehzahl. Fig. 2 zeigt in schematischer Darstellung eine Heizungsanlage mit einer Heizpumpe und einer erfindungsgemäßen Anordnung zur Ermittlung einer Sollwert-Anlagenkurve.

Zunächst auf Fig. 1 Bezug nehmend ist darin ein Pumpen-Förderhöhen/Fördermengen-Diagramm und ein Leistungsaufnahme/Fördermengen-Diagramm für eine Kreiselpumpe dargestellt. Wie bereits erwähnt, existiert für jede Drehzahl der Kreiselpumpe eine charakteristische Kurve der elektrischen Leistungsaufnahme eines die Kreiselpumpe antreibenden Elektromotors in Abhängigkeit von der Fördermenge der Kreiselpumpe, und eine charakteristische Kurve der Pumpen-Förderhöhe in Abhängigkeit von der Fördermenge der Kreiselpumpe, so dass die beiden Diagramme tatsächlich aus Kurvenscharen diskreter Kurven für die verschiedenen Pumpendrehzahlen bestehen. In Fig. 1 sind die Leistungsaufnahmekurve ("Leistungskennlinie") und die Förderhöhenkurve ("Pumpenkennlinie") über der Fördermenge für eine Pumpendrehzahl von n = 50 Hz vollständig dargestellt; andere Leistungskennlinien und Pumpenkennlinien für Drehzahlen von n = 23,2 Hz, n = 26,3 Hz, n = 32,4 Hz, n = 40,5 Hz sind nur stückweise in interessierenden Abschnitten dargestellt. Weiters ist in diesen Diagrammen bereits die gesuchte Sollwert-Anlagenkurve als Funktion P_{Anlage}(Q) der Motor-Leistungsaufnahme in Abhängigkeit von der Pumpen-Fördermenge bzw. als Funktion H_{Analge}(Q) der Pumpen-Förderhöhe in Abhängigkeit von der Pumpen-Fördermenge eingetragen, die jeweils von Parametern der gesamten Anlage bestimmt werden.

Im folgenden wird erläutert, wie man mittels des erfindungsgemäßen Verfahrens zu den gesuchten Sollwert-Anlagenkurven P_{Anlage}(Q) bzw. H_{Anlage}(Q) gelangt.

Zunächst werden alle Verbraucher in der Anlage geschlossen und ein DifferenzdruckSensor an den von der Pumpe am entferntesten angeordneten Verbraucher angeschlossen. Dieser Differenzdruck muss einen vorbestimmten Wert erreichen oder übersteigen, damit seine Funktion im normalen Betrieb gewährleistet werden kann, z.B. um bei einem Heizkörper als Verbraucher sicherzustellen, dass Heizmedium in ausreichender Menge und Geschwindigkeit durch ihn hindurchströmt. Daraufhin wird die momentane Pumpenleistung variiert, bis der Differenzdruck am genannten Verbraucher den vorgegebenen Wert annimmt. Das Erreichen dieses Werts wird manuell oder automatisch an einen Regler signalisiert. Auf den Erhalt des Bestätigungs-Signals wird der Regler veranlasst, die momentanen Werte eines Pumpen-Parameterpaars zu ermitteln, das für die momentane Förderleistung der Pumpe repräsentativ ist und diese Werte abzuspeichern. In den dargestellten Ausführungsformen umfasst das Pumpen-Parameterpaar in einem Fall die Förderhöhe und die Fördermenge und im anderen Fall die aufgenommene elektrische Leistung des Pumpen-Antriebsmotors und die Fördermenge. Bevorzugt erfolgt die Ermittlung dieser Werte-Paare im ersten Fall durch eine Messung der Pumpendrehzahl und der aufgenommenen elektrischen Leistung, woraus sich aus der zugehörigen Leistungskennlinie, die im Regler beispielsweise in einem Kennfeld gespeichert sein kann, die Pumpen-Fördermenge errechnen läßt. Das so ermittelte Parameterpaar ist als Punkt P1 im Leistungsdiagramm eingetragen. Im zweiten Fall werden die Drehzahl der Pumpe und die Förderhöhe (mittels einer Differenzdruck-Messung) gemessen und aus der zugehörigen Pumpenkennlinie die Fördermenge ermittelt, wodurch sich ein Punkt H1 ergibt.

Nach Abschluss dieser ersten Messung werden ein oder mehrere Verbraucher geöffnet und das geschilderte Messverfahren wiederholt. Diese Prozedur wird für eine jeweils geänderte Anzahl an offenen Verbrauchern noch mehrmals wiederholt, so dass sich im ersten Fall eine Messwert-Reihe an Punkten P1 bis P4 und im zweiten Fall eine Reihe an Punkten H1 bis H4 ergibt.

Aus den abgespeicherten Werten der Pumpen-Parameterpaare (Punkte P1 - P4 bzw. H1 - H4) wird nunmehr im Regler computergestützt unter Verwendung bekannter mathematischer Kurvenbildungsverfahren (Ausgleichskurvenbildung etc.) eine Funktion errechnet und diese mathematische Funktion als Sollwert-Anlagenkurve P_{Anlage}(Q) bzw. H_{Anlage}(Q) im Regler abgespeichert, wo sie nunmehr zur Regelung der Pumpendrehzahl in Abhängigkeit von der momentanen Fördermenge zur Verfügung steht.

In Fig. 2 ist schematisch ein Beispiel für eine praktische Ausführungsform der Erfindung dargestellt. Es handelt sich dabei um eine Heizungsanlage mit einer Kreiselpumpe 6 und einer erfindungsgemäßen Anordnung zur Regelung der Drehzahl dieser Kreiselpumpe. Über ein Leitungssystem 2 wird flüssiges Heizmedium zu Heizkörpern 4-1, 4-2 ... 4-n gepumpt und zur Pumpe zurückgeführt, wobei die Heizkörper 4-1, 4-2 ... 4-n jeweils einzeln durch Drosselventile 8 steuerbar sind, so dass sich je nach Stellung dieser Drosselventile der Durchfluss im Heizungskreislauf und damit die Fördermenge der Kreiselpumpe 6 verändern kann.

Die Pumpe 6 wird durch einen Drehstrom-Motor 10 angetrieben, dessen Drehzahl steuerbar ist. Die Steuerung der Drehzahl erfolgt in diesem Beispiel durch einen Frequenzumrichter 12. In der elektrischen Verbindungsleitung zwischen Frequenzumrichter 12 und Drehstrom-Motor 10 ist ein Leistungsmessgerät 14 angeordnet, das die elektrische Leistungsaufnahme des Motors 10 misst und ein die Leistungsaufnahme repräsentierendes Signal, wie z.B. eine elektrische Gleichspannung, liefert. Hierzu eignet sich gegebenenfalls auch ein Frequenzumrichter mit integrierter elektrischer Leistungsaufnahme-Messung und entsprechendem Signalausgang. Ferner wäre es ebenfalls möglich, die elektrische Leistungsaufnahme vor dem Frequenzumrichter zu messen, da sich der Leistungsverbrauch des Frequenzumrichters im Vergleich zu jenem des Motors kaum auf die Regelung auswirkt. Der Leistungs-Signalausgang des Leistungsmessgeräts 14 ist mit dem Eingang eines Reglers 16 verbunden. Der Ausgang des Reglers 16, der in der oben beschriebenen Weise eine die gewünschte Drehzahl bestimmende Ausgangsgröße, z.B. eine elektrische Gleichspannung zwischen 0 und 10 V oder einen Gleichstrom zwischen 4 und 20 mA liefert, ist an den Steuerungseingang des Frequenzumrichters 12 angeschlossen. Die Regelungskennlinie des Reglers 16 ist die oben erläuterte Funktion P_{Anlage}(Q) und ist im Regler als mathematische Funktion definiert. Der Regler 16 ist vorzugsweise ein digitales Regelgerät unter Verwendung eines Mikroprozessors.

Am Zu- und Ablauf des am weitesten von der Pumpe 6 entfernten Heizkörpers 4-n wird zur Ermittlung der Sollwert-Anlagenkurve vorübergehend ein Druckdifferenz-Sensor 24 angeschlossen. Übersteigt der Differenzdruck einen vorgegebenen Wert, so wird eine Bestätigung zum Regler 16 übermittelt; dies ist durch die Übertragungsleitung 22 symbolisiert, wobei zu beachten ist, dass die Art dieser Übertragungsleitung in keiner Weise eingeschränkt ist. Es kann sich dabei um eine Draht- oder Funkleitung zur Übertragung analoger oder digitaler Signale handeln. Wenn das Verfahren zur Ermittlung der Sollwert-Anlagenkurve nicht automatisiert durchgeführt wird, ist es auch denkbar, dass eine am Regler 16 postierte Bedienperson von einer zweiten, am Druckdifferenz-Sensor 24 postierten Bedienperson Anweisungen erhält und gemäß diesen Anweisungen das Bestätigungs-Signal händisch in den Regler 16 eingibt.

Um zu demonstrieren, dass neben einer Regelung der Pumpendrehzahl durch Messung der aufgenommenen elektrischen Leistung des Pumpenmotors als Rückkopplungsgröße auch andere Regelungsverfahren, wie z.B. eines mit Differenzdruckmessung als Rückkopplungsgröße infrage kommen, ist in Fig. 2 strichliert ein Druckdifferenz-Sensor 18 zwischen Pumpenausgang und -eingang angeschlossen. Um weiters zu zeigen, dass auch die Pumpen-Fördermenge direkt gemessen werden kann, ist strichliert ein entsprechendes Fördermengen-Messgerät 20 eingezeichnet.

## Patentansprüche

1. Verfahren zur Ermittlung einer Sollwert-Anlagenkurve (H_{Anlage}(Q), P_{Anlage}(Q)) zur Regelung der Förderleistung einer von einem drehzahlgeregelten Elektromotor (10) angetriebenen Pumpe (6), mittels derer ein Fluid in einer Anlage durch vorgegebene Leitungen (2) und Verbraucher (4-1, 4-2, 4-n) bewegt wird, deren Anzahl und lichter Querschnitt variabel sind, bei welchem Regelungsverfahren mittels eines Sensors (14, 18, 20) eine für die momentane Förderleistung der Pumpe repräsentative physikalische Größe erfaßt und ein dieser physikalischen Größe proportionales elektrisches Signal einem Regler (16) als Ist-Wert zugeführt wird, durch welchen Regler die Drehzahl des Elektromotors und damit die Förderleistung der Pumpe (6) anhand der Sollwert-Anlagenkurve (H_{Anlage}(Q), P_{Anlage}(Q)) geregelt wird, wobei die Ermittlung der Sollwert-Anlagenkurve **gekennzeichnet ist durch**
a) das Schließen aller Verbraucher in der Anlage,
b) das Erfassen eines Verbraucher-Betriebsparameters an einem von der Pumpe entfernten Verbraucher, vorzugsweise an dem von der Pumpe am entferntesten angeordneten Verbraucher (4-n), welcher Parameter für die Betreibbarkeit dieses Verbrauchers repräsentativ ist, und das Variieren der momentanen Pumpenleistung, bis der Verbraucher-Betriebsparameter einen vorgegebenen Wert annimmt,
c) das Übermitteln eines Bestätigungs-Signals an den Regler (16), sobald der Verbraucher-Betriebsparameter den vorgegebenen Wert erreicht hat,
d) auf den Erhalt des Bestätigungs-Signals das Ermitteln der momentanen Werte eines Pumpen-Parameterpaars, das für die momentane Förderleistung der Pumpe repräsentativ ist und Speichern dieser Werte im Regler (16),
e) das Öffnen eines oder mehrerer Verbraucher und Wiederholen der Verfahrensschritte b) bis d), und
f) das Errechnen einer Funktion **durch** ein mathematisches Kurvenbildungsverfahren aus den abgespeicherten Werten der Pumpen-Parameterpaare, und Abspeichern dieser Funktion als Sollwert-Anlagenkurve (H_{Anlage}(Q), P_{Anlage}(Q)) im Regler (16).

2. Verfahren nach Anspruch 1, **dadurch gekennzeichnet, dass** der Verfahrensschritt e) zumindest zweimal hintereinander durchgeführt wird.

3. Verfahren nach Anspruch 1 oder 2, **dadurch gekennzeichnet, dass** der Verbraucher-Betriebsparameter ein Differenzdruck zwischen dem Eingang und dem Ausgang des Verbrauchers (4-n) ist.

4. Verfahren nach einem der Ansprüche 1 bis 3, **dadurch gekennzeichnet, dass** das Pumpen-Parameterpaar die Pumpen-Fördermenge (Q) und die aufgenommene elektrische Leistung (P) des Pumpen-Antriebsmotors (10) umfasst und ermittelt wird durch Messen von zwei Parametern aus der Pumpen-Fördermenge (Q), der aufgenommenen elektrischen Leistung (P) des Pumpen-Antriebsmotors (10) und der Drehzahl (n) der Pumpe, gegebenenfalls unter Errechnen des fehlenden Parameters aus den mathematischen Zusammenhängen zwischen diesen drei Parametern.

5. Verfahren nach einem der Ansprüche 1 bis 3, **dadurch gekennzeichnet, dass** das Pumpen-Parameterpaar die Pumpen-Fördermenge (Q) und die Pumpen-Förderhöhe (H) umfasst und ermittelt wird durch Messen von zwei Parametern aus der Pumpen-Fördermenge (Q), der Pumpen-Förderhöhe (H) und der Drehzahl (n) der Pumpe, gegebenenfalls unter Errechnen des fehlenden Parameters aus den mathematischen Zusammenhängen zwischen diesen drei Parametern.

## Claims

1. A method of determining a set-point curve (Hᵢₙₛₜₐₗₗₐₜᵢₒₙ(Q), Pᵢₙₛₜₐₗₗₐₜᵢₒₙ(Q)) of an installation for controlling the delivery rate of a pump (6) driven by a speed-controlled electric motor (10), by means of which pump a fluid in an installation is moved through predetermined conduits (2) and consumers (4-1, 4-2, 4-n) the number and clear diameters of which are variable, wherein in said controlling method a physical quantity representative of the instantaneous delivery rate of the pump is acquired by means of a sensor (14, 18, 20) and an electric signal proportional to said physical quantity is supplied to a control unit (16) as an actual value, the rotational speed of the electric motor and hence the delivery rate of the pump (6) being controlled by said control unit on the basis of the set-point installation curve (Hᵢₙₛₜₐₗₗₐₜᵢₒₙ(Q), Pᵢₙₛₜₐₗₗₐₜᵢₒₙ(Q)), wherein the determination of the set-point installation curve is **characterized by**
a) closing all consumers in the installation,
b) acquiring a consumer operational parameter at a consumer remote from the pump, preferably at the consumer (4-n) arranged farthest from the pump, which parameter is representative of the operating ability of said consumer, and varying the instantaneous pumping capacity until the consumer operational parameter assumes a predetermined value,
c) transmitting a confirmation signal to the control unit (16) once the consumer operational parameter has reached the predetermined value,
d) upon receipt of the confirmation signal, determining the instantaneous values of a pump parameter pair which is representative of the instantaneous delivery rate of the pump, and storing said values in the control unit (16),
e) opening one or more consumers and repeating process steps b) to d), and
f) calculating a function from the stored values of the pump parameter pairs by means of a mathematical curve-formation method, and storing said function as a set-point installation curve (Hᵢₙₛₜₐₗₗₐₜᵢₒₙ(Q), Pᵢₙₛₜₐₗₗₐₜᵢₒₙ(Q)) in the control unit (16).

2. A method according to claim 1, **characterized in that** process step e) is carried out at least twice in succession.

3. A method according to claim 1 or 2, **characterized in that** the consumer operational parameter is a differential pressure between the input and the output of the consumer (4-n).

4. A method according to any of claims 1 to 3, **characterized in that** the pump parameter pair comprises the pump flow rate (Q) and the electrical power (P) taken up by the pump drive motor (10) and is determined from the pump flow rate (Q), the electrical power (P) taken up by the pump drive motor (10) and the rotational speed (n) of the pump by measuring two parameters, wherein the missing parameter optionally is calculated from the mathematical correlations between those three parameters.

5. A method according to any of claims 1 to 3, **characterized in that** the pump parameter pair comprises the pump flow rate (Q) and the delivery head (H) of the pump and is determined from the pump flow rate (Q), the delivery head (H) of the pump and the rotational speed (n) of the pump by measuring two parameters, wherein the missing parameter optionally is calculated from the mathematical correlations between those three parameters.

## Revendications

1. Procédé de détermination d'une courbe de valeur de consigne dans une installation (Hᵢₙₛₜₐₗₗₐₜᵢₒₙ(Q), Pᵢₙₛₜₐₗₗₐₜᵢₒₙ(Q) pour la régulation de la capacité de refoulement d'une pompe (6) entraînée par un moteur électrique (10) à vitesse réglée, au moyen de laquelle un fluide est véhiculé dans une installation par des conduites (2) et des consommateurs (4-1, 4-2, 4-n) prédéterminés, dont le nombre et la dimension intérieure sont variables, procédé de régulation dans lequel une grandeur physique représentative de la capacité de refoulement momentanée de la pompe est saisie au moyen d'un capteur (14, 18, 20), et un signal électrique proportionnel à cette grandeur physique est amené à titre de valeur réelle à un régulateur (16) par lequel la vitesse du moteur électrique et par conséquent la capacité de refoulement de la pompe (6) est réglée à l'aide de la courbe de valeur de consigne dans l'installati8on (Hᵢₙₛₜₐₗₗₐₜᵢₒₙ(Q), Pᵢₙₛₜₐₗₗₐₜᵢₒₙ(Q), la détermination de la courbe de valeur de consigne dans l'installation étant **caractérisée par**
a) la fermeture de tous les consommateurs dans l'installation,
b) la saisie d'un paramètre de fonctionnement de consommateur au niveau d'un consommateur éloigné de la pompe, de préférence au niveau du consommateur (4-n) agencé le plus loin de la pompe, paramètre qui est représentatif du fonctionnement de ce consommateur, et la variation de la capacité momentanée de la pompe jusqu'à ce que le paramètre de fonctionnement du consommateur ait adopté une valeur prédéterminée,
c) la transmission au régulateur (16) d'un signal de confirmation dès que le paramètre de fonctionnement du consommateur a atteint la valeur prédéterminée,
d) après réception du signal de confirmation, la détermination de la valeur momentanée d'une paire de paramètres de pompe qui est représentative de la capacité de refoulement momentanée de la pompe et la mémorisation de ces valeurs dans le régulateur (16),
e) l'ouverture d'un ou de plusieurs consommateurs et la répétition des étapes de procédé b) à d), et
f) le calcul d'une fonction par un processus mathématique de formation de courbe à partir des valeurs mémorisées des paires de paramètres de pompe, et la mémorisation de cette fonction à titre de courbe de valeur de consigne dans l'installation (Hᵢₙₛₜₐₗₗₐₜᵢₒₙ(Q), Pᵢₙₛₜₐₗₗₐₜᵢₒₙ(Q) dans le régulateur (16).

2. Procédé selon la revendication 1, **caractérisé en ce que** l'étape de procédé e) est exécutée au moins deux fois consécutivement.

3. Procédé selon l'une ou l'autre des revendications 1 et 2, **caractérisé en ce que** le paramètre de fonctionnement de consommateur est une pression différentielle entre l'entrée et la sortie du consommateur (4-n).

4. Procédé selon l'une des revendications 1 à 3, **caractérisé en ce que** la paire de paramètres de pompe comprend le débit de refoulement de pompe (Q) et la puissance électrique consommée (P) par le moteur d'entraînement de pompe (10), et est déterminée en mesurant deux paramètres parmi le débit de refoulement de pompe (Q), la puissance électrique consommée (P) par le moteur d'entraînement de pompe (10) et la vitesse (n) de pompe, le cas échéant en calculant le paramètre manquant, à partir des rapports mathématiques entre ces trois paramètres.

5. Procédé selon l'une des revendications 1 à 3, **caractérisé en ce que** la paire de paramètres de pompe comprend le débit de refoulement de pompe (Q), et la hauteur de refoulement de pompe (H) et est déterminée en mesurant deux paramètres parmi le débit de refoulement de pompe (Q), la hauteur de refoulement de pompe (H) et la vitesse (n) de pompe, le cas échéant en calculant le paramètre manquant, à partir des rapports mathématiques entre ces trois paramètres.
